# EUROPÄISCHE PATENTSCHRIFT

(11) **EP 2 975 179 B1**
(45) Veröffentlichungstag und Bekanntmachung des Hinweises auf die Patenterteilung: **27.12.2017**
(21) Anmeldenummer: 15001944.6
(22) Anmeldetag: 30.06.2015
(51) Int. Cl.: E01C 19/48, B65G 15/30

(54) **BESCHICKER**
FEEDER
CHARGEUR

(30) Priorität: 18.07.2014 DE 102014010524; 21.08.2014 DE 102014012461
(43) Veröffentlichungstag der Anmeldung: 20.01.2016
(73) Patentinhaber: Dynapac GmbH, 26203 Wardenburg (DE)
(72) Erfinder: Verstraeten, Jan, 2880 Bornem (BE); Mooren, Axel, 26209 Hatten-Sandkrug (DE)
(74) Vertreter: Möller, Friedrich

(56) Entgegenhaltungen:
- EP-A1- 1 725 787
- EP-A1- 2 385 003
- KR-A- 20110 092 159
- US-A1- 2012 103 764

## Beschreibung

Die Erfindung betrifft einen Beschicker gemäß dem Oberbegriff des Anspruchs 1.

Oberflächenbeläge bzw. Straßenaufbauten, die beispielsweise begehbar bzw. befahrbar sind, wie insbesondere Fahrbahnbeläge bzw. Straßendeckschichten und Straßendecken, werden üblicherweise aus Materialien, wie vorzugsweise Asphalt hergestellt. Zum Herstellen der auf einem Untergrund aufgebrachten Materialschicht werden im Allgemeinen sogenannte Fertiger, insbesondere Straßenfertiger eingesetzt.

Das Material wird dem Straßenfertiger daher üblicherweise zumindest im Wesentlichen kontinuierlich zugeführt, um einen gleichmäßigen und möglichst ununterbrochenen Materialauftrag zu gewährleisten. Als Puffer für kürzere Lieferunterbrechungen weist der Straßenfertiger im Allgemeinen einen auch als Materialbunker bezeichneten Behälter bzw. Vorratsbehälter auf. Das Material wird dazu üblicherweise von einem sogenannten Beschicker mit Hilfe eines Förderers in diesen Vorratsbehälter geladen. Dazu weist der Beschicker üblicherweise einen Gurtförderer auf, der das Material, insbesondere das Straßenbaumaterial zum Vorratsbehälter des Straßenfertigers transportiert. Derartige Gurtförderer oder Förderbänder für Straßenbauarbeiten sind beispielsweise aus EP 1 725 787 B1 oder EP 2 385 003 A1 bekannt.

Derartige Gurtförderer weisen üblicherweise mindestens einen Fördergurt auf. Diese Fördergurte sind üblicherweise als Endlosgurte ausgebildet und werden bei der Herstellung durch Vulkanisieren, Kleben oder dergleichen zusammengefügt. Durch diese Endlos-Ausgestaltung des Fördergurts werden diese bereits während der Montage des Beschickers in diesen integriert.

Während des Zuführens bzw. Beschickens des Vorratsbehälters des Straßenfertigers mit Straßenbaumaterial wird der Fördergurt des Gurtförderers durch das zu fördernde Material mechanisch und thermisch stark beansprucht. Aufgrund dieser starken Beanspruchung kann es vorkommen, dass der Fördergurt reißt oder zumindest partiell beschädigt wird. Im Falle eines Reißens oder einer Beschädigung muss der Fördergurt, wenn möglich repariert oder ausgetauscht werden. Zur Reparatur bzw. zum Austausch des Endlosfördergurtes muss der Beschicker zumindest teilweise demontiert werden, um den beschädigten Endlosfördergurt auszubauen bzw. um einen neun Endlosfördergurt einzubauen. Eine verlässliche Reparatur des gerissenen Fördergurts verlangt es, dass dieser neu geklebt oder vulkanisiert wird. Dazu bedarf es Fachpersonal, Spezialwerkzeug, sowie vor allem viel Zeit. Auf der Baustelle ist dies daher meist gar nicht oder nur schwer durchführbar. Dadurch wird die Reparatur bzw. der Austausch des Fördergurtes sehr teuer und zeitaufwendig. Aus KR 2011 0092159 A und US 2012/103764 A1 sind Fördergurte bekannt, deren beiden offenen Enden durch Verbindungsmittel miteinander koppelbar sind. Allerdings genügen diese einfachen Verbindungsmittel nicht den erhöhten Anforderungen bzgl. der Stabilität, die bei der Verwendung in einem Beschicker notwendig sind. Darüber hinaus ragt das Verbindungsmittel über die Oberflächen des Fördergurtes hinaus, was sich negativ auf den Materialtransport sowie auf die Wartung des Förderbandes auswirken kann.

Der Erfindung liegt nun die Aufgabe zugrunde, einen Beschicker zu schaffen, der weniger kosten- und zeitintensiv betrieben werden kann.

Ein Beschicker zur Lösung dieser Aufgabe weist die Merkmale des Anspruchs 1 auf. Außerdem ist es denkbar, dass die beiden Enden des Fördergurts auf umgekehrte Weise wieder entkoppelbar sind. Durch die Möglichkeit des Zusammenkoppelns bzw. des Auseinanderkoppelns lässt sich der Fördergurt auf eine einfache und schnelle Art und Weise für beispielsweise Wartungszwecke montieren bzw. demontieren. Auch ist es denkbar, ein gerissener Fördergurt durch ein Verbindungsmittel wieder zusammenkuppelbar ist bzw. sich reparieren lässt. Somit ist es durch denkbar, dass ein Fördergurt mehrere Verbindungsmittel aufweist. Außerdem lässt sich der Fördergurt dadurch im entkoppelten Zustand, das heißt mit zwei offenen Enden, dem Gurtförderer zuführen und nach entsprechender Positionierung, zu einem Endlosförderer zusammenkoppeln.

Gleichermaßen lässt sich der Endlosförderer durch Entkoppeln der Verbindungsmittel wieder vom Gurtförderer lösen. Dies ist besonders vorteilhaft, wenn der Fördergurt partiell repariert werden muss. Auch ein kompletter Austausch eines beschädigten Fördergurtes ist auf diese Art und Weise schnell, einfach und ohne Fachwissen bzw. ohne Verwendung von Spezialwerkzeugen durchführbar. Es ist außerdem vorgesehen, dass einem gerissenen Fördergurt, der bisher verklebt oder vulkanisiert wurde, mit einem derartigen Verbindungsmittel versehen werden kann. Dadurch lässt sich der Fördergurt schnell reparieren und die Standzeit des Beschickers verringern. Durch das bündige Abschließen des wenigstens einen Verbindungsmittels mit den beiden Oberflächen des Fördergurts wird vermieden, dass auf der Oberfläche des Fördergurtes der Widerstand für das zu fördernde Straßenbaumaterial erhöht wird und dadurch die Leistung des Beschickers reduziert bzw. der Koppelmechanismus des Fördergurtes beschädigt oder sogar geöffnet werden kann.

Des Weiteren kann es als besonders vorteilhaft angesehen werden, dass ein Spaltraum zwischen den beiden Enden des Fördergurts durch das wenigstens eine Verbindungsmittel überbrückbar ist. Dadurch, dass der Spaltraum zwischen den beiden Enden zumindest größtenteils geschlossen ist, kommt es kaum zu einem Materialverlust durch die verbleibenden Öffnungen. Es ist vorgesehen, dass die verbleibenden Öffnungen zwischen den Enden nicht größer sind, als das Straßenbaumaterial selbst. Insbesondere kann es weiter vorgesehen sein, dass das wenigstens eine Verbindungsmittel den Spaltraum zwischen den beiden Enden des Fördergurts zumindest teilweise ausfüllt.

Eine besonders vorteilhafte Ausgestaltung der Erfindung kann es außerdem vorsehen, dass das wenigstens eine Verbindungsmittel der beiden Enden des Fördergurts als mechanisches Verbindungsmittel ausgebildet ist. Es ist jedoch auch denkbar, dass die Verbindungsmittel anderer Art sind. Insbesondere mechanische Verbindungsmittel sind einfach und ohne großen Aufwand bedienbar und ohne Schwierigkeiten auch auf der Baustelle montierbar.

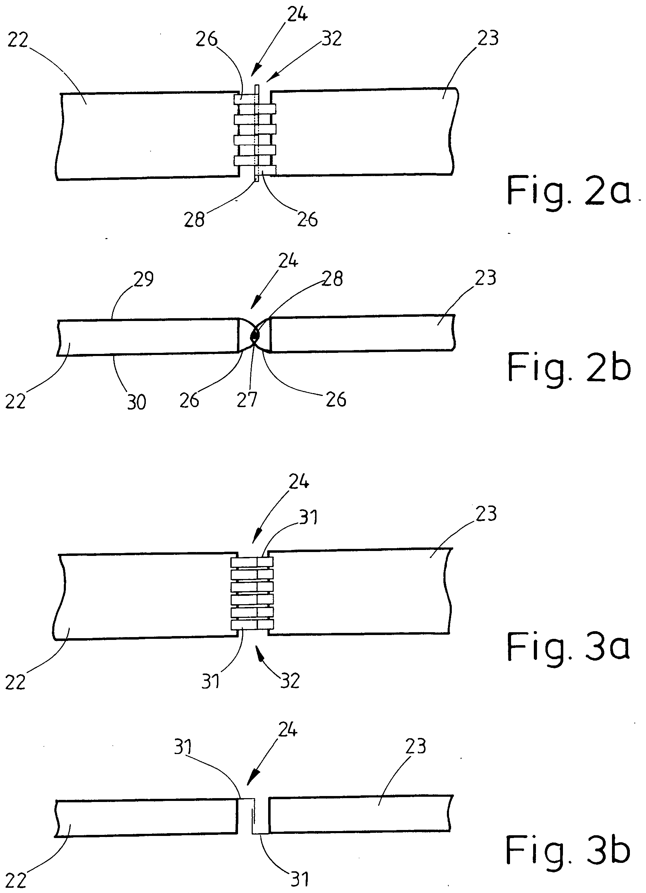

Weiter ist es erfindungsgemäß vorgesehen, dass das wenigstens eine Verbindungsmittel als separate Verbindungselemente, nämlich als Ösen und Haken ausgebildet ist. Dabei ist jedem freien Ende des Fördergurtes mindestens ein Verbindungselement fest zugeordnet. Diese Verbindungselemente sind an den Enden des Fördergurtes verkrimpt bzw. als Krampen ausgebildet. Bei diesen Verbindungselementen kann es sich in nicht erfindungsgemäßen Ausführungensformen (Fig. 2a-3b) beispielsweise um Klammern, Haken oder gleichartige mechanische Koppelorgane handeln. Diese Verbindungselemente, die demselben Ende des Fördergurtes zugeordnet sind, sind entweder separat oder untereinander gekoppelt bzw. zusammenhängend ausgebildet. Insbesondere durch das Zusammenhängen mehrerer Verbindungselemente eines Endes des Fördergurtes erleichtert die Kopplung zwischen den Verbindungselementen zweier freier Enden des Fördergurts.

Des Weiteren kann es als vorteilhaft angesehen werden, dass jedem Ende des Fördergurts wenigstens ein Verbindungselement zugeordnet ist, wobei die Verbindungselemente beider Enden in nicht erfindungsgemäßen Ausführungsformen gleich ausgebildet sind. Insbesondere ist es bei diesen Ausführungsformen vorgesehen, dass die zusammenhängenden Verbindungselemente eines Endes des Fördergurtes gegenüber den gleichbeschaffenen zusammenhängenden Verbindungselementen des anderen Endes des Fördergurts quer zu einer Längsmittelachse des Fördergurtes verschoben sind. Diese in nicht erfindungsgemäße Ausführungsform sieht weiter vor, dass die den Enden des Fördergurts zugeordneten Verbindungselemente durch mindestens ein weiteres Verbindungsorgan, insbesondere einen Stift, einen Draht, eine Stange oder dergleichen zusammenkoppelbar sind. So wird beispielsweise durch die zusammengefügten Verbindungselemente beider Enden des Fördergurtes ein Stift bzw. eine Stange geschoben, so dass bei Zugbelastung des Fördergurtes die Verbindungselemente durch den Stift fest miteinander gekoppelt sind. Die Verbindungselemente sind dabei vorzugsweise als Laschen, Ringe oder Ösen ausgebildet. Die Erfindung sieht vor, dass den beiden Enden des Fördergurts unterschiedliche Verbindungselemente zugeordnet sind, die derart korrespondieren, dass sie zusammenkoppelbar sind, insbesondere durch Einhaken. Demnach weist beispielsweise ein Ende des Fördergurtes ein "male" Organ auf, und das entsprechende zweite Ende des Fördergurtes ein korrespondierendes "female" Organ. Durch Ineinanderfügen der "male" und "female" Organe werden die beiden Enden des Fördergurtes zu einem Endlosförderer zusammengekoppelt.

Weiter ist es erfindungsgemäß vorgesehen, dass die Verbindungselemente bündig bzw. nahezu bündig mit beiden Oberflächen des Fördergurtes abschließen. Dadurch wird vermieden, dass auf der Oberfläche des Fördergurtes der Widerstand für das zu fördernde Straßenbaumaterial erhöht wird und dadurch die Leistung des Beschickers reduziert bzw. der Koppelmechanismus des Fördergurtes beschädigt oder sogar geöffnet werden kann.

Bevorzugte Ausführungsbeispiele werden im Folgenden anhand der Zeichnung näher beschrieben. In dieser zeigt:

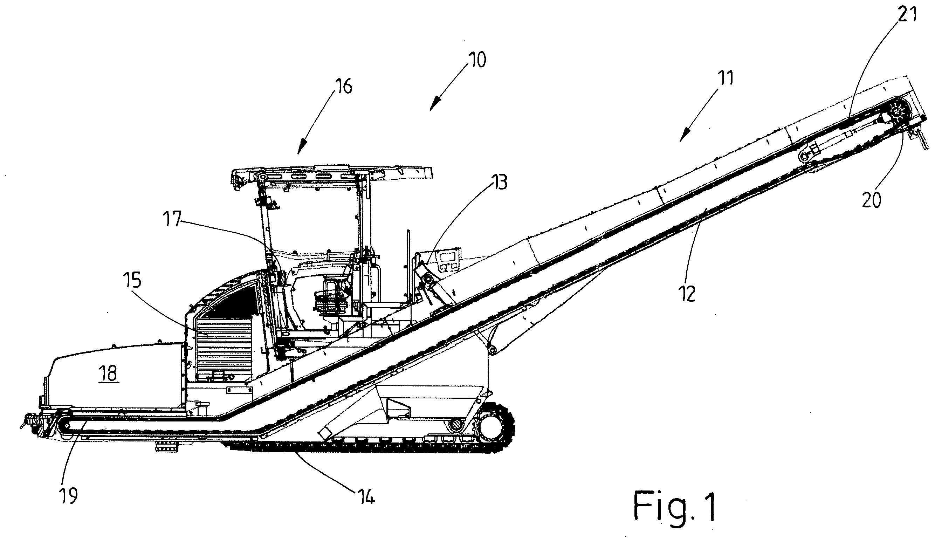

- Fig. 1: ein Beschicker mit einem Gurtförderer,
- Fig. 2a: eine Sicht auf ein nicht erfindungsgemäßes Ausführungsbeispiel eines Verbindungsmittels zweier Enden eines Fördergurtes,
- Fig. 2b: eine Seitenansicht eines Ausführungsbeispiels des Verbindungsmittels aus Fig. 2a,
- Fig. 3a: eine Sicht auf ein weiteres, nicht erfindungsgemäßes Ausführungsbeispiel eines Verbindungsmittels zweier Enden eines Fördergurtes,
- Fig. 3b: eine Seitenansicht eines Ausführungsbeispiels des Verbindungsmittels aus Fig. 3a,
- Fig. 4a: eine Sicht auf ein Ausführungsbeispiel eines erfindungsgemäßen Verbindungsmittels zweier Enden eines Fördergurtes, und
- Fig. 4b: eine Seitenansicht eines Ausführungsbeispiels des Verbindungsmittels aus Fig. 4a.

Ein Einbauzug zum Herstellen eines Oberflächenbelags bzw. einer Straße aus Asphalt umfasst üblicherweise zumindest einen in den Figuren nicht dargestellten Straßenfertiger und zumindest einen Beschicker 10. Der Straßenfertiger dient dazu, ihm zugeführtes Material, wie beispielsweise den Asphalt, auf den Untergrund aufzubringen, ihn dort mehr oder weniger gleichmäßig zu verteilen und geeignet zu verdichten. Der Straßenfertiger weist an einem vorderen Endbereich einen Vorratsbehälter für Material auf. Diesem Vorratsbehälter wird das Material während des Betriebs des Straßenfertigers sukzessive entnommen und durch das Innere, insbesondere den unteren, bodennahen Bereich des Straßenfertigers in den Bereich der Einbaubohle transportiert.

Das Material wird dem Vorratsbehälter des Straßenfertigers durch den Beschicker 10 zugeführt. Dazu weist der Beschicker 10 einen Förderausleger 11 mit einem sich an diesem entlang erstreckendem Förderer 19, insbesondere Gurtförderer 12 auf. Der Förderausleger 11 ist an einem hinteren Endbereich des Beschickers 10 angelenkt. Zur Höhenverstellung und seitlichen Verstellung des Förderauslegers 11 ist eine Schwenkvorrichtung 13 vorgesehen. Die Schwenkvorrichtung 13 ist automatisch oder durch eine Bedienperson steuerbar, insbesondere verschwenkbar. Damit kann sichergestellt werden, dass das mithilfe des Gurtförderers 12 transportierte Straßenbaumaterial in jedem Fall den Vorratsbehälter des Straßenfertigers trifft. Dazu wird der Förderausleger 11 dem Straßenfertiger beim Verfahren geeignet nachgeführt. Dies ist insbesondere für das gemeinsame Fahren des Straßenfertigers und des Beschickers 10 notwendig.

Zum Verfahren weist der Beschicker 10 ein Fahrwerk 14 auf, das hier als Raupenfahrwerk ausgebildet ist. Als Antrieb für das Fahrwerk 14 und die verschiedenen Einheiten des Beschickers 10 besitzt dieser eine eigene Antriebseinheit 15; typischerweise mit einem Verbrennungsmotor. Zur Steuerung des Beschickers 10, also insbesondere des Fahrwerks 15, des Gurtförderers 12 und des Förderauslegers 11, ist ein Bedienstand 16 mit Bedienelementen 17 vorgesehen.

Am vorderen Endbereich des Beschickers 10 weist dieser einen Vorratsbehälter 18 auf. In diesem Vorratsbehälter 18 kann ein hier nicht dargestelltes Transportfahrzeug, wie beispielsweise ein Lastkraftwagen, beispielsweise mit einer kippbaren Ladefläche einen Vorrat des Materials schütten. Das Material wird vorzugsweise mithilfe eines Förderers, wie beispielsweise eines Kratzförderers aus dem Vorratsbehälter 18 entnommen. Der Förderer erstreckt sich dazu vom Bereich des Vorratsbehälters 18 bis in den Bereich des Förderauslegers 11. Dort wird das Material auf einen Gurtförderer 12 umgeladen, indem es beispielsweise auf diesen herabfällt. Der Gurtförderer 12 transportiert das Material dann weiter entlang des Förderauslegers 11. An dessen freien Endbereich fällt es dann von dieser herunter. Aufgrund der Transportgeschwindigkeit des Gurtförderers 12 fällt das Material üblicherweise parallel bzw. bogenförmig entgegen der Fahrtrichtung nach vorn herunter.

Der Gurtförderer 12 weist zum Transport des Straßenbaumaterials einen Fördergurt 21 auf, der an seinen Endbereichen jeweils eine Umlenktrommel 20 aufweist, von der mindestens eine als Antriebstrommel ausgebildet ist. Der Fördergurt 21 wird außerdem von Rollen bzw. Untertrum-Tragrollen geführt bzw. stabilisiert.

Der Fördergurt 21 des Gurtförderers 12 weist zwei offene Enden, nämlich ein erstes Ende 22 und ein zweites Ende 22 auf (Fig. 2a, b). Der Fördergurt 21 ist üblicherweise ein Gummigurt, kann aber auch als Drahtgurt oder Stahlband ausgebildet sein. Die Länge des Fördergurts 21 ist genau derart bemessen, dass im am Beschicker 10 installierten Zustand die beiden Enden 22 und 23 des Fördergurts 21 nur wenige Zentimeter voneinander entfernt sind. Außerdem kann der Abstand der beiden Enden 22 und 23 durch den Gurtförderer 12 eigene, nicht dargestellte Stellvorrichtungen bzw. verstellbare Rollen und/oder Trommeln variiert bzw. eingestellt werden.

Die beiden freien Enden 22 und 23 des Fördergurts 21 sind durch ein Verbindungsmittel 24 zusammenkoppelbar (Fig. 2a, Fig. 2b). Dieses Verbindungsmittel 24 weist vorzugsweise mehrere Verbindungselemente 25 auf. Bei dem in Fig. 2a und Fig. 2b dargestellten Ausführungsbeispiel des Verbindungsmittels 24 sind die Verbindungselemente 25 laschenartige Schlaufen 26, die zusammenhängend oder separat dem ersten Ende 22 und dem zweien Ende 23 des Fördergurts 21 derart zugeordnet sind, dass beim Zusammenfügen des ersten Endes 22 mit dem zweiten Ende 23 die Schlaufen 26 derart ineinandergreifen bzw. überlappen, dass sie einen gemeinsamen Durchgang 27 bilden (Fig. 2b). Durch diesen gemeinsamen Durchgang 27 lässt sich ein Stift 28 bzw. ein Draht oder eine Stange stecken. Sobald eine Zugspannung auf den Fördergurt 21 bzw. auf die beiden Enden 22 und 23 ausgeübt wird, verhindert der Stift 28 in dem Durchgang 27 der Schlaufen 26, dass sich die beiden Enden 22 und 23 auseinanderbewegen, bzw. bewirken, dass der Fördergurt 21 einen Endlosfördergurt bildet. Die Verbindungselemente 25 bzw. die Schlaufen 26 sind derart an den Enden 22 bzw. 23 befestigt, insbesondere verkrimpt, dass sie nicht über eine Oberseite 29 bzw. Unterseite 30 des Fördergurts 21 wegragen. Durch Entnahme des Stiftes 28 lässt sich der Fördergurt 21 auf einfache Art und Weise von dem Gurtförderer 12 zu Wartungszwecken oder zum Wechseln entfernen. Die Schlaufen 26 lassen sich auch jedem beliebige, gerissene Fördergurte 21 zufügen, der bisher verklebt oder vulkanisiert wurde.

Ein weiteres Ausführungsbeispiel eines Verbindungsmittels 24 ist in den Figuren 3a und 3b dargestellt. Hier sind dem ersten Ende 22 bzw. dem zweiten Ende 23 als Verbindungselemente 25 Haken 31 zugeordnet. Die Haken 31 sind an dem ersten Ende 22 separat oder miteinander zusammenhängend fest zugeordnet, vorzugsweise verkrimpt. Auf gleiche Art und Weise aber um 180° gedreht sind ebenso Haken 31 an dem zweiten Ende 23 des Fördergurts 21 befestigt. Beim Zusammenfügen der beiden Enden 22 und 23 des Fördergurts 21 greifen die Haken 31 der beiden Enden 22 und 23 derart ineinander, dass sie bei Zugspannung eine feste Verbindung eingehen, wodurch der Fördergurt 21 zu einem Endlosfördergurt wird. Bei diesem Ausführungsbeispiel sind die Haken 31 derart dimensioniert und positioniert, dass ein Spaltraum 32 zwischen den beiden Enden 22 und 23 überbrückt wird bzw. kaum Freiräume aufweist. Dies ist insbesondere vom Vorteil, da so nur wenig Straßenbaumaterial durch den Spaltraum 32 hindurch fallen kann.

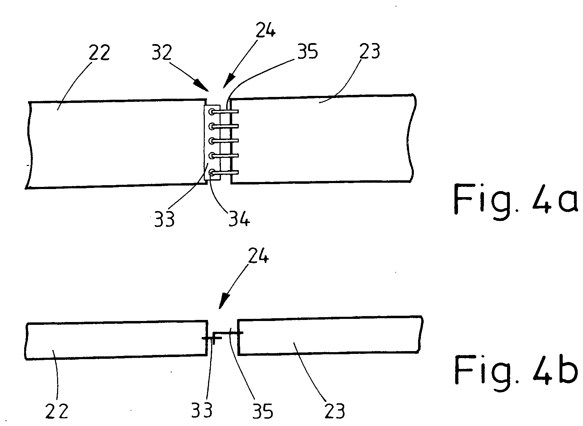

Ein Ausführungsbeispiel des erfindungsgemäßen Verbindungsmittels 24 wird durch die Figuren 4a und 4b dargestellt. Bei den in den Figuren 4a und 4b dargestellten Ausführungsbeispielen ist dem ersten Ende 22 eine Platte 33 zugeordnet, die sich in den Spaltraum 32 hinein erstreckt. Diese Platte 33 weist mehrere parallele Öffnungen bzw. Ösen 34 auf. Das gegenüberliegende zweite Ende 23 des Fördergurts 21 weist zu den Ösen 34 korrespondierende Haken 35 auf. Diese Haken 35 sind untereinander derart zusammengefügt, dass sie sich gemeinsam in die leeren Ösen 34 einhängen lassen. Bei Zugausübung auf den Fördergurt 21 bilden die Haken 35 mit den Ösen 34 eine feste Verbindung, so dass der Fördergurt 21 einen Endlosförderer bildet. Das in den Figuren 4a und 4b dargestellte Ausführungsbeispiel der vorliegenden Erfindung stellt lediglich schematische Darstellungen einer Ausführung der Verbindungsmittel dar.

### Bezugszeichenliste:

- 10: Beschicker
- 11: Förderausleger
- 12: Gurtförderer
- 13: Schwenkvorrichtung
- 14: Fahrwerk
- 15: Antriebseinheit
- 16: Bedienstand
- 17: Bedienelemente
- 18: Vorratsbehälter
- 19: Förderer
- 20: Umlenktrommel
- 21: Fördergurt
- 22: erstes Ende
- 23: zweites Ende
- 24: Verbindungsmittel
- 25: Verbindungselement
- 26: Schlaufe
- 27: Durchgang
- 28: Stift
- 29: Oberseite
- 30: Unterseite
- 31: Haken
- 32: Spaltraum
- 33: Platte
- 34: Öse
- 35: Haken

## Patentansprüche

1. Beschicker (10) mit einem Fahrwerk (14), wenigstens einem Vorratsbehälter (18) zur Aufnahme von Straßenbaumaterial oder Ähnlichem und mindestens einem einen endlos gemachten Fördergurt (21) aufweisenden Gurtförderer (12) zum Zuführen von Straßenbaumaterial oder Ähnlichem aus dem Vorratsbehälter (18) zu einem Straßenfertiger oder dergleichen, **dadurch gekennzeichnet, dass** zur Endlosmachung des Fördergurts (21) zwei Enden (22, 23) desselben durch wenigstens ein Verbindungsmittel (24) zusammenkoppelbar sind, wobei das wenigstens eine Verbindungsmittel (24) die beiden Enden (22, 23) des Fördergurts (21) lösbar miteinander verbindet und das wenigstens eine Verbindungsmittel (24) als separate unterschiedliche Verbindungselemente (25), nämlich Ösen (34) und Haken (31, 35) ausgebildet ist, die derart korrespondieren, dass sie zusammenkoppelbar sind, sowie die Verbindungselemente (25) des wenigstens einen Verbindungsmittels (24) bündig beziehungsweise nahezu bündig mit beiden Oberflächen (29, 30) des Fördergurts (21) abschließen.

2. Beschicker (10) nach Anspruch 1, **dadurch gekennzeichnet, dass** jeweils ein Verbindungsmittel (24) zwei korrespondierende offene Enden (22, 23) des Fördergurts (21) miteinander verbindet.

3. Beschicker (10) nach Anspruch 1 oder 2, **dadurch gekennzeichnet, dass** ein Spaltraum (32) zwischen den beiden Enden (22, 23) des Fördergurts (21) durch das wenigstens eine Verbindungsmittel (24) überbrückbar ist.

4. Beschicker (10) nach einem der vorhergehenden Ansprüche, **dadurch gekennzeichnet, dass** das wenigstens eine Verbindungsmittel (24) den Spaltraum (32) zwischen den beiden Enden (22, 23) des Fördergurts (21) zumindest teilweise ausfüllt.

5. Beschicker (10) nach einem der vorhergehenden Ansprüche, **dadurch gekennzeichnet, dass** das wenigstens eine Verbindungsmittel (24) der beiden Enden (22, 23) des Fördergurts (21) als mechanisches Verbindungsmittel (24) ausgebildet ist.

6. Beschicker (10) nach einem der vorhergehenden Ansprüche, **dadurch gekennzeichnet, dass** das wenigstens eine Verbindungsmittel (24) als zusammenhängende Verbindungselemente (25) ausgebildet ist.

7. Beschicker (10) nach einem der vorhergehenden Ansprüche, **dadurch gekennzeichnet, dass** jedem Ende (22, 23) des Fördergurts (21) wenigstens ein Verbindungselement (25) zugeordnet ist.

8. Beschicker (10) nach einem der vorhergehenden Ansprüche, **dadurch gekennzeichnet, dass** die den beiden Enden (22, 23) des Fördergurts (21) zugeordneten Verbindungselemente (25) derart korrespondieren, dass sie durch Einhaken zusammenkoppelbar sind.

## Claims

1. Feeder (10) having a chassis (14), at least one storage container (18) for receiving road-building material or the like, and at least one belt conveyor (12), having a conveyor belt (21), rendered endless, for feeding road-building material or the like from the storage container (18) to a road paver or the like, **characterized in that**, in order to render the conveyor belt (21) endless, two ends (22, 23) thereof are able to be coupled together by at least one connecting means (24), wherein the at least one connecting means (24) connects the two ends (22, 23) of the conveyor belt (21) releasably together, and the at least one connecting means (24) is in the form of separate, different connecting elements (25), namely eyes (34) and hooks (31, 35), which correspond such that they are able to be coupled together, and the connecting elements (25) of the at least one connecting means (24) terminate flush, or at least virtually flush, with the two surfaces (29, 30) of the conveyor belt (21).

2. Feeder (10) according Lo Claim 1, **characterized in that** in each case one connecting means (24) connects two corresponding open ends (22, 23) of the conveyor belt (21) together.

3. Feeder (10) according to Claim 1 or 2, **characterized in that** a gap (32) between the two ends (22, 23) of the conveyor belt (21) is able to be bridged by the at least one connecting means (24).

4. Feeder (10) according to one of the preceding claims, **characterized in that** the at least one connecting means (24) at least partially fills the gap (32) between the two ends (22, 23) of the conveyor belt (21) .

5. Feeder (10) according to one of the preceding claims, **characterized in that** the at least one connecting means (24) of the two ends (22, 23) of the conveyor belt (21) is in the form of a mechanical connecting means (24).

6. Feeder (10) according to one of the preceding claims, **characterized in that** the at least one connecting means (24) is in the form of linking connecting elements (25).

7. Feeder (10) according to one of the preceding claims, **characterized in that** each end (22, 23) of the conveyor belt (21) is assigned at least one connecting element (25).

8. Feeder (10) according to one of the preceding claims, **characterized in that** the connecting elements (25) assigned to the two ends (22, 23) of the conveyor belt (21) correspond such that they are able to be coupled together by hooking.

## Revendications

1. Chargeur (10) comprenant un châssis de roulement (14), au moins un réservoir (18) pour recevoir un matériau de construction routière ou similaire et au moins un transporteur à courroie (12) présentant une courroie de transport réalisée sans fin (21) pour acheminer un matériau de construction routière ou similaire depuis le réservoir (18) jusqu'à un finisseur ou similaire, **caractérisé en ce que** pour rendre sans fin la courroie de transport (21), deux extrémités (22, 23) de celle-ci peuvent être accouplées l'une à l'autre par au moins un moyen de liaison (24), l'au moins un moyen de liaison (24) reliant l'une à l'autre de manière détachable les deux extrémités (22, 23) de la courroie de transport (21) et l'au moins un moyen de liaison (24) étant réalisé sous forme d'éléments de liaison séparés différents (25), à savoir des oeillets (34) et des crochets (31, 35) qui se correspondent de telle sorte qu'ils puissent être accouplés les uns aux autres, et les éléments de liaison (25) de l'au moins un moyen de liaison (24) se terminant en affleurement ou presque en affleurement avec les deux surfaces (29, 30) de la courroie de transport (21) .

2. Chargeur (10) selon la revendication 1, **caractérisé en ce qu'**un moyen de liaison (24) relie à chaque fois l'une à l'autre deux extrémités ouvertes correspondantes (22, 23) de la courroie de transport (21).

3. Chargeur (10) selon la revendication 1 ou 2, **caractérisé en ce qu'**un espace en forme d'interstice (32) entre les deux extrémités (22, 23) de la courroie de transport (21) peut être surmonté par l'au moins un moyen de liaison (24).

4. Chargeur (10) selon l'une quelconque des revendications précédentes, **caractérisé en ce que** l'au moins un moyen de liaison (24) remplit au moins en partie l'espace en forme d'interstice (32) entre les deux extrémités (22, 23) de la courroie de transport (21).

5. Chargeur (10) selon l'une quelconque des revendications précédentes, **caractérisé en ce que** l'au moins un moyen de liaison (24) des deux extrémités (22, 23) de la courroie de transport (21) est réalisé sous forme de moyen de liaison mécanique (24).

6. Chargeur (10) selon l'une quelconque des revendications précédentes, **caractérisé en ce que** l'au moins un moyen de liaison (24) est réalisé sous forme d'éléments de liaison (25) reliés entre eux.

7. Chargeur (10) selon l'une quelconque des revendications précédentes, **caractérisé en ce qu'**au moins un élément de liaison (25) est associé à chaque extrémité (22, 23) de la courroie de transport (21).

8. Chargeur (10) selon l'une quelconque des revendications précédentes, **caractérisé en ce que** les éléments de liaison (25) associés aux deux extrémités (22, 23) de la courroie de transport (21) se correspondent de telle sorte qu'ils puissent être accouplés l'un à l'autre par accrochage.
